**Europäisches Patentamt**

**European Patent Office**

**Office européen des brevets**

(11) Veröffentlichungsnummer: **0 492 272 A1**

# EUROPÄISCHE PATENTANMELDUNG

(21) Anmeldenummer: **91121206.6**

(22) Anmeldetag: **11.12.91**

(51) Int. Cl.5: **F02B 37/04**, F02B 37/00

(30) Priorität: **20.12.90 DE 4040939**

(43) Veröffentlichungstag der Anmeldung:
**01.07.92 Patentblatt 92/27**

(84) Benannte Vertragsstaaten:
**AT BE CH DK ES FR GB IT LI NL SE**

(71) Anmelder: **J.G. Mailänder GmbH & Co.**
**Etzelstrasse 1**
**W-7120 Bietigheim-Bissingen(DE)**

(72) Erfinder: **Mailänder, Udo**
**Etzelstrasse 1**
**W-7120 Bietigheim-Bissingen(DE)**

(74) Vertreter: **Schiering, Hans, Dipl.-Ing.**
**Westerwaldweg 4**
**W-7030 Böblingen(DE)**

(54) **Aufgeladene Brennkraftmaschine.**

(57) Sie ist in der Drehmomentcharakteristik an die Zugkrafthyperbel angepaßt, bietet bereits nahe der Drehzahl Null ein erheblich gesteigertes Drehmoment und zeichnet sich durch eine im Verhältnis zur Maschinengröße hohe Leistung aus.

Dazu ist als gesonderter Motor (11) für das dem von einer Abgasturbine (15) angetriebenen Ladegebläse (20) in Serie vorgeschaltete Vorgebläse (19) und als Hauptmotor (10) je ein Rotationskolben-Dieselmotor mit niedriger Verdichtung bei stark ungleicher Leistungsdimensionierung verwendet, das Vorgebläse (19) als volumetrischer Verdichter für den hohen Anlauf-Ladeluftdruck ausgebildet und der Ladeluftdruckmesser (24) zusammen mit einem Ladelufttemperaturmesser (25) zur Regelung des Betriebs-Ladeluftdrucks des Hauptmotors (10) durch einen Leistungsregler (23) des Vorgebläsemotors (11) eingesetzt. Weitere Leistungssteigerungen werden mit Hilfe von Dauerglühzündeinrichtungen und ununterbrochen arbeitenden Dieselöleinspritzeinrichtungen erreicht.

Die Brennkraftmaschine eignet sich insbesondere zum wechselgetriebefreien Direktantrieb eines Kraftfahrzeugs.

EP 0 492 272 A1

Die Erfindung betrifft eine aufgeladene Brennkraftmaschine, bei der ladeluftseitig ein von einem gesonderten Motor angetriebenes Vorgebläse einem von einer Abgasturbine angetriebenen Ladegebläse in Serie vorgeschaltet ist und nach dem stromabwärts letzten Ladegebläse ein Ladeluftdruckmesser zur Beeinflussung der Ladeluftmenge vorgesehen ist.

Mit der Aufladung einer Brennkraftmaschine wird vorrangig eine Leistungssteigerung bezweckt. Aus einem sonst schwachen Verbrennungsmotor läßt sich mit Hilfe der Aufladung die Leistung eines erheblich größeren Verbrennungsmotors herausholen. Bei einer vorgegebenen Nennleistung kann der Motor beispielsweise zur Senkung des Eigengewichts eines von ihm angetriebenen Kraftfahrzeugs beträchtlich verkleinert werden. Abgasturbolader mit vom Druck der Abgase des Verbrennungsmotors angetriebener Turbine und mit von der Turbine angetriebenem Ladegebläse haben den prinzipiellen Nachteil der unzureichenden Aufladung im Hochlast-Niedrigdrehzahl-Bereich des Verbrennungsmotors infolge einer unzureichenden Abgasmenge mit zu geringem Druck, was den Verbrennungsmotor träge und im unteren Drehzahlbereich schwach macht. Mechanische Verdrängerlader, die vom Verbrennungsmotor selbst oder von einem gesonderten Motor angetrieben sein können, fördern leicht die für den Leerlauf des Verbrennungsmotors benötigte Luft, können aber im Hochlast-Hochdrehzahl-Bereich des Verbrennungsmotors nicht mit einem Abgasturbolader konkurrieren. Aus diesen Gründen ist es üblich, an einer Brennkraftmaschine die jeweiligen Vorteile eines Abgasturboladers und eines mechanischen Verdrängerladers durch eine Serienschaltung oder eine Parallelschaltung der beiden Lader zu kombinieren.

Durch das Dokument DT 23 50 784 C2 ist bereits eine aufgeladene Brennkraftmaschine der eingangs angeführten Gattung bekannt. Um mit vertretbarem Aufwand und geringem Platzbedarf unter weitestgehender Ausschaltung von Energieverlusten in dem vom Vorgebläse erzeugten Luftstrom eine ungestörte Zuströmung des von außen kommenden Luftstroms zu erreichen und eine strömungstechnisch günstige Vermischung der beiden Luftströme sicherzustellen, ist bei der bekannten Brennkraftmaschine das Vorgebläse mittels eines geraden Rohrschiebers an das Ladegebläse anschließbar, der zur Freigabe eines Ringspalts zwischen sich und einer ringförmigen Wand des Lufteinlaufs des Ladegebläses axial verstellbar ist. Die Serienvorschaltung des Vorgebläses wird lediglich im unteren Leistungsbereich des Hauptmotors voll praktiziert. Der als Fremdantrieb des Vorgebläses vorgesehene Drehstrommotor mit konstant hoher Drehzahl wird im oberen Leistungsbereich des Hauptmotors ausgeschaltet. Da das Vorgebläse auf eine hohe Fördergeschwindigkeit unter äußerst geringer Verdichtung ausgelegt ist, eignet es sich nicht für einen niedrig verdichtenden Dieselmotor, der insbesondere beim Anlauf einen wesentlich höheren Ladedruck erfordert. Zwar verbessert die Aufladung das Drehmomentverhalten der Brennkraftmaschine insbesondere auch bei niedrigen Drehzahlen, von einem Dampfmaschinen-Charakter nahe der Drehzahl Null ist man jedoch noch weit entfernt. Mit der leichten und platzsparenden Bauweise des Vorgebläses ist keineswegs eine wesentliche Verkleinerung der gesamten Brennkraftmaschine verbunden. Wenn auch bei der bekannten Brennkraftmaschine nach dem stromabwärts letzten Ladegebläse ein Ladeluftdruckmesser zur Beeinflussung der Ladeluftmenge vorgesehen ist, so ist damit noch nicht garantiert, daß stets ein hinsichtlich Drehmoment, Brennstoffverbrauch und Schadstoffausstoß optimaler Ladeluftdruck ansteht. Darüber hinaus bietet die bekannte Brennkraftmaschine keine so weitreichende Anpassung der Drehmomentcharakteristik an die Zugkrafthyperbel, daß beim Antrieb eines Kraftfahrzeuges auf die Zwischenfügung eines Wechselgetriebes verzichtet werden kann.

Der Erfindung liegt die Aufgabe zugrunde, eine in der Drehmomentcharakteristik an die Zugkrafthyperbel angepaßte Brennkraftmaschine mit einem bereits nahe der Drehzahl Null erheblich gesteigerten Drehmoment und mit einer im Verhältnis zur Maschinengröße hohen Leistung bei gleichzeitig sparsamem Brennstoffverbrauch zu schaffen, mit der beim Antrieb eines Kraftfahrzeugs auf die Zwischenfügung eines Wechselgetriebes verzichtet werden kann.

Diese Aufgabe wird erfindungsgemäß an einer Brennkraftmaschine der eingangs angeführten Art dergestalt gelöst, daß als gesonderter Motor für das Vorgebläse und als Hauptmotor je ein Rotationskolben-Dieselmotor mit niedriger Verdichtung bei stark ungleicher Leistungsdimensionierung von Hauptmotor und kleinerem Vorgebläsemotor verwendet ist, das Vorgebläse als volumetrischer Verdichter für den hohen Anlauf-Ladeluftdruck ausgebildet ist und zusätzlich zu seinem Motor einen elektrischen Startermotor aufweist, zwischen dem Luftausgang des Vorgebläses und dem Lufteinlaß des Vorgebläsemotors eine Sperrschiebereinrichtung zur anfänglichen Alleinladung des Vorgebläsemotors vorgesehen ist, am Hauptmotor für dessen jeweils erste Umdrehung ein vom Vorgebläse und dessen Motor in Betriebsbereitschaft gebrachter ladeluftbetätigter Totpunktüberwinder vorhanden ist und der Ladeluftdruckmesser zusammen mit einem nahebei angeordneten Ladelufttemperaturmesser zur Regelung des gegenüber dem hohen Anlauf-Ladeluftdruck temperaturabhängig niedrigeren Betriebs-Ladeluftdrucks des Hauptmotors durch einen Leistungsregler des Vorgebläsemotors eingesetzt ist.

Während bei einem Hubkolben-Dieselmotor mit einer geometrisch-mechanischen Verdichtung von beispielsweise 20:1 fünf Prozent als Totraum verbleiben, ergibt sich für die verwendeten Rotationskolben-Dieselmotoren mit einer Verdichtung von beispielsweise nur 2:1 ein Totraum von fünfzig Prozent, was auf den gleichen Zünddruck bezogen die Möglichkeit zur Aufladung auf ein zehnfaches Ladungsgewicht eröffnet. Dem entspricht eine Verzehnfachung des Drehmomentes, die sich jedoch auf eine vierfache Länge des Drehwinkels des Arbeitshubes verteilt. Da kaum ein Wechselgetriebe eine größere Untersetzungsspanne als 1:10 erzeugt, genügt die Verzehnfachung des Drehmomentes zur Erledigung des Bedarfs eines Wechselgetriebes.

Die Verbrennung wird durch die extrem niedri-ge geometrisch-mechanische Verdichtung, entspre-chend der gleichen geometrisch-mechanischen Expansion, auf die ganzen 120 Winkelgrade der Ar-beitsbewegung des Rotationskolbens verteilt, wo-gegen der Arbeitshub sonst praktisch nach 30 Winkelgraden Drehbewegung der Kurbel beendet ist. Weitere Vorteile der verwendeten Rotationskolben-Dieselmotoren bestehen darin, daß eine Glühzündung keinen Raumkontakt zum Verdichtungshub hat, eine während der ganzen Betriebszeit ununterbrochene Dieselöleinspritzung möglich ist und trotz der niedrigen Verdichtung nur ein Minimum von Restgas mit dem Frischgas in Berührung kommt.

Beim Anlassen des kleineren der beiden im Tandem betriebenen Rotationskolben-Dieselmotoren wird der Verdrängerlader zusammen mit dem kleineren Rotationskolben-Dieselmotor durch den elektrischen Startermotor solange angetrieben, bis in dem kleineren Rotationskolben-Dieselmotor ein für die Selbstzündung ausreichendes Temperaturniveau von etwa 750 bis 800 °K und ein entspre-chendes Druckniveau zustandegekommen sind. Beim anschließenden Anfahren des Hauptmotors wird das für den Dieselprozeß mindestnotwendige Kompressionsdruckniveau von ca. 25 bar durch den Antrieb des Verdrängerladers vom kleineren Rotationskolben-Dieselmotor garantiert, was dann das volle Drehmoment des Hauptmotors praktisch aus dem Stand heraus ermöglicht. Im normalen Fahrbetrieb schließlich kann der Abgasturbolader bei etwa 20% der Nenndrehzahl beginnend selbst Ladedruck liefern. Mit modernen Abgasturboladern lassen sich der Normaldruck oder der bereits erhöhte Druck einstufig vervierfachen und zweistufig verachtfachen. Durch die geometrisch-mechanische Verdichtung von beispielsweise nur 2:1 in den Rotationskolben-Dieselmotoren ergibt sich mit einem Ladedruck von 4 bar ein Zünddruck von ca. 100 bar und mit einem Ladedruck von 8 bar ein Zünddruck von ca. 150 bar.

Der als Strömungslader einzustufende Abgasturbolader verbindet eine sehr hohe Leistungsdichte mit einem sehr kleinen Bauvolumen, ist jedoch für sich genommen nicht in der Lage, konstante Drücke bei variierenden Fördermengen zu erbringen, geschweige denn stark ansteigende Drücke bei stark abnehmendem Volumen. Demgegenüber erbringt der mechanische Verdrängerlader sogar die bei der erfindungsgemäßen Lösung geforderten höchsten Drücke bei geringstem Fördervolumen. Deshalb kann das mechanisch vom kleineren Rotationskolben-Dieselmotor angetriebene Vorgebläse den Start des größeren Rotationskolben-Dieselmotors mit ca. 25 bar Ladedruck aus dem Stand heraus genauso bewerkstelligen wie die Ergänzung der Förderhöhe zu 4 oder 8 bar. Ohne Strömungslader wäre keine extreme Verkleinerung des mechanischen Laders möglich. Eine große Antriebsmaschine für einen großen mechanischen Lader aber würde den Gewichtsvorteil eines eingesparten Wechselgetriebes zunichte machen.

Ein aufgrund der in den Unteransprüchen angegebenen Erfindungsausgestaltungen bevorzugtes Ausführungsbeispiel der Erfindung ist in der überwiegend schematischen Zeichnung dargestellt und wird im folgenden näher beschrieben.

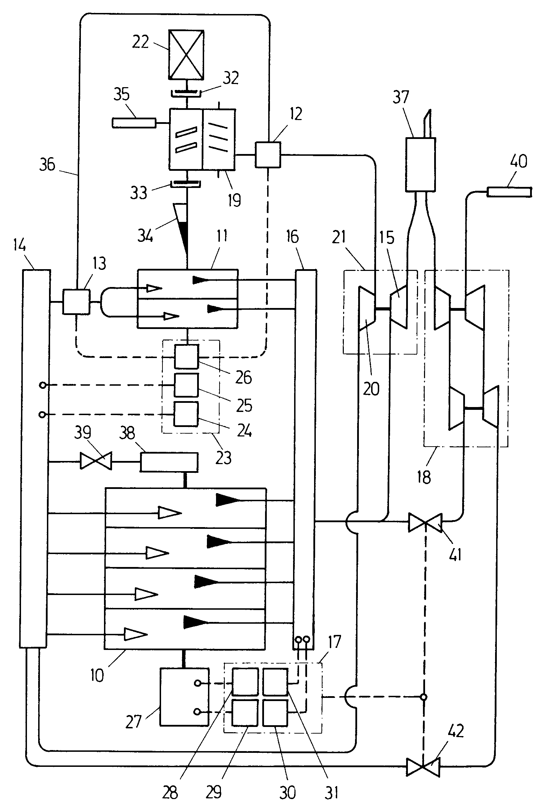

Die Zeichnung zeigt eine aufgeladene Brennkraftmaschine mit einem vier Rotationskolben umfassenden Hauptmotor 10 und einem zwei Rotationskolben umfassenden Vorgebläsemotor 11. An jedem dieser Rotationskolben ist die Ladeluftseite durch eine helle Pfeilspitze und die Abgasseite durch eine dunkle Pfeilspitze kenntlich gemacht. Durch die seitliche Versetzung der Pfeilspitzenpaare wird die winkelmäßige Versetzung der Rotationskolben angedeutet. Dadurch, daß der Hauptmotor 10 und der Vorgebläsemotor 11 mit mehr als einem Rotationskolben ausgestattet sind, wird jeweils ein weicherer Lauf erzielt und lassen sich die radia-len Motorabmessungen zu geringeren Fliehkraft-werten hin verkleinern.

Der Hauptmotor 10 und der Vorgebläsemotor 11 stimmen in ihrer geometrischen Verdichtung von vorzugsweise 2:1 überein, wodurch die Einrichtungen zur Ladeluftregelung nur einmal vorhanden sein müssen und man insbesondere mit nur einem Ladeluftsammler auskommen kann. Da sich der Ladeluftdruck vom Motorhubraum und der Motordrehzahl unabhängig regeln läßt, ist der Vorgebläsemotor 11 mit der anfänglichen Einschränkung durch die Sperrschiebereinrichtung 12 + 13 an einen mit dem Hauptmotor 10 gemeinsamen Ladeluftsammler 14 angeschlossen. Beiden Motoren 10 und 11 steht dann gleichzeitig derselbe Ladeluftdruck zur Verfügung. Außerdem sind der Vorgebläsemotor 11 und der Hauptmotor 10 an einen zu der Abgasturbine 15 führenden gemeinsamen Abgassammler 16 angeschlossen, um die beiderseitigen Abgasdrücke einander anzugleichen, aus den beiden zusammengefaßten Abgasströmen ein gemeinsames Regelsignal ableiten zu können und um das Gewicht der Brennkraftmaschine weiter zu senken.

Von einem Leistungsmelder 17 des Hauptmotors 10 ist wenigstens ein zweistufiger Abgasturbolader 18 parallel zu der Serienschaltung des Vorgebläses 19 und des von der Abgasturbine 15 angetriebenen Ladegebläses 20 zuschaltbar. Damit kann man den Vorgebläsemotor 11 entsprechend seinem prozentualen Anteil an der Ladeleistung verkleinern. Bei der Zuschaltbarkeit lediglich eines zweistufigen Abgasturboladers 18 halbiert sich die notwendige Größe des Vorgebläsemotors 11 und bei der gestaffelten Zuschaltbarkeit zweier zweistufiger Abgasturbolader 18 drittelt sich die notwendige Größe des Vorgebläsemotors 11. Die Zuschaltung eines ersten zweistufigen Abgasturboladers 18 erfolgt bei etwa 50% der Leistung des Hauptmotors 10, wogegen der mit dem Vorgebläse 19 in Serie liegende und von dem Ladegebläse 20 und der Abgasturbine 15 gebildete einstufige Abgasturbolader 21 schon bei etwa 20% der Nenndrehzahl des Hauptmotors 10 beginnend Ladeleistung beisteuern kann.

Dadurch, daß der Hauptmotor 10 ohne Zwischenfügung eines Wechselgetriebes zum Antrieb eines Kraftfahrzeuges eingesetzt ist, wird das Eigengewicht des Kraftfahrzeugs beträchtlich reduziert, läßt sich die Beschleunigung insbesondere beim Anfahren stark erhöhen und entfällt zusammen mit jedwedem Untersetzungswechsel eine Zugkraftunterbrechung, die vor allem beim Beschleunigen des Kraftfahrzeugs als unerwünschte Unstetigkeit in Erscheinung tritt. Das Gewicht des eingesparten Wechselgetriebes ist im allgemeinen nahezu so groß wie das Gewicht des nackten Fahrzeugmotors. Die Größe des Vorgebläsemotors 11 beträgt etwa ein Zehntel der Größe des Hauptmotors 10 und die Größe des für das Vorgebläse 19 zusätzlich vorgesehenen elektrischen Startermotors 22 etwa ein Zehntel der Größe des Vorgebläsemotors 11.

Der Leistungsregler 23 des kleineren Vorgebläsemotors 11 umfaßt außer dem an den Ladeluftsammler 14 angeschlossenen Ladeluftdruckmesser 24 und den ebenfalls zum Ladeluftsammler 14 führenden Ladelufttemperaturmesser 25 einen Drehzahlgeber 26. Zusammengenommen bewirken diese Sensoren die Einregelung eines bei gleichbleibender Ladelufttemperatur konstanten Ladeluftdrucks und bei steigender Ladelufttemperatur entsprechend reduzierten Ladeluftdrucks. Eine Abhängigkeit vom Fahrpedal des als Fahrmotor dienenden Hauptmotors 10 besteht jedoch nicht.

Zur Betriebsregelung des Hauptmotors 10 sind ein an dessen Kupplung 27 endender Lastsensor 28, ein ebenfalls dort angeschlossener Drehzahlgeber 29, ein an den Abgassammler 16 angeschlossener Abgasdruckmesser 30 und ein ebenfalls zum Abgassammler 16 führender Abgastemperaturmesser 31 zum Leistungsmelder 17 zusammengefaßt. Diese Sensoren bewirken relativ zur Fahrpedalstellung die Kraftstoffmengenregelung sowie die Zuschaltung des wenigstens einen zweistufig ausgebildeten zusätzlichen Abgasturboladers 18.

Bei der Inbetriebnahme der Brennkraftmaschine wird das Vorgebläse 19 zunächst vom elektrischen Startermotor 22 über eine Starterkupplung 32 solange angetrieben, bis in dem mit dem Vorgebläse 19 über eine Kupplung 33 und einen Variator 34 verbundenen kleineren Rotationskolben-Dieselmotor 11 ein für dessen Selbstzündung ausreichendes Temperatur- und Druck-Niveau erreicht ist. In dieser Anfangsphase wird die über einen Ansaugfilter 35 der Umgebung entnommene und vom Vorgebläse 19 verdichtete Luft über eine Umgehungsleitung 36 allein dem Vorgebläsemotor 11 zugeleitet, indem die zum Ladegebläse 20 bestehende Verbindung vom einen Sperrschieber 12 der Sperrschiebereinrichtung 12 + 13 blockiert ist und die zwischen dem Vorgebläsemotor 11 und dem Ladeluftsammler 14 bestehende Verbindung vom anderen Sperrschieber 13 der Sperrschiebereinrichtung 12 + 13. Umgekehrt wird die Umgehungsleitung 36 blockiert und der Normalpfad der Ladeluft freigegeben, wenn die Sperrschiebereinrichtung 12 + 13 mit dem Erreichen einer vorgegebenen Drehzahl des Vorgebläsemotors 11 vom Drehzahlgeber 26 ein diesbezügliches Schaltsignal erhält. Dann strömt bereits Abgas über den Abgassammler 16 und die Abgasturbine 15 zum Auspufftopf 37.

Der Hauptmotor 10 wird mit Hilfe des vom Vorgebläse 19 und dessen Motor 11 in Betriebsbereitschaft gebrachten Totpunktüberwinders 38 quasi aus der Grundstellung des Fahrpedals heraus gestartet, und zwar durch das Öffnen des den Totpunktüberwinder 38 mit dem Ladeluftsammler 14 verbindenden Zweiwegeventils 39. Der Totpunktüberwinder 38 bietet der Druckluft eine große Wirkungsfläche bei einer großen Kraftübersetzung und hat am Hauptmotor allenfalls für dessen erste Umdrehung zu sorgen. Danach wird er sofort wieder in seine Bereitschaftsstellung zurückversetzt. Nachdem der Hauptmotor 10 von allen sonst üblichen Nebenaggregaten entkoppelt ist, steht seine ganze Leistung ausschließlich zum Beschleunigen des ihm zugeordneten Kraftfahrzeugs zur Verfügung. Mit dem Anhalten des Kraftfahrzeugs kommt auch der Hauptmotor 10 der aufgeladenen Brennkraftmaschine zum Stehen und muß dann beim Wiederanfahren mit Hilfe des ladeluftbetätigten Totpunktüberwinders 38 erneut gestartet werden.

Der zweistufige zusätzliche Abgasturbolader 18 hat mit dem einstufigen Abgasturbolader 21 den Auspufftopf 37 gemeinsam, ist mit einem eigenen Ausaugfilter 40 ausgestattet, kann abgasseitig über ein erstes Schaltventil 41 an den Abgassammler 16 angeschlossen werden und ladeluftseitig über ein zweites Schaltventil 42 mit dem Ladeluftsammler 14 in Verbindung treten. Geöffnet werden die beiden Schaltventile 41 und 42 bei etwa 50% der Leistung des Hauptmotors 10 auf ein entsprechendes Signal des Leistungsmelders 17, was in der Zeichnung durch gestrichelt wiedergegebene Signalleitungen angedeutet ist. Innerhalb des zweistufigen Abgasturboladers 18 treibt die vom Abgas zuerst durchströmte Abgasturbine das als Nachverdichter dienende Ladegebläse und die vom Abgas zuletzt durchströmte Abgasturbine das als Vorverdichter dienende Ladegebläse.

Um den Zünddruck zu senken und dadurch eine Bauteileschonung oder eine weitere Verkleinerung und Erleichterung der Bauteile zu erreichen, sind der Vorgebläsemotor 11 und der Hauptmotor 10 mit je einer in ihrer Gesamtbetriebszeit oder zumindest in ihrer Warmlaufphase aktivierten Dauerglühzündeinrichtung versehen. Außerdem sind der Vorgebläsemotor 11 und der Hauptmotor 10 mit je einer über 360° Drehwinkel der Rotationskolben ununterbrochen arbeitenden Dieselöleinspritzeinrichtung versehen, so daß man mit einer wesentlich einfacheren Einspritzpumpe auskommt, eine praktisch ununterbrochene Drehmomententfaltung über 360° Kurbelwinkel erzielt wird und sich der absolute Spitzenzünddruck und die absolute Spitzentemperatur beträchtlich verringern.

**Patentansprüche**

1. Aufgeladene Brennkraftmaschine, bei der ladeluftseitig ein von einem gesonderten Motor (11) angetriebenes Vorgebläse (19) einem von einer Abgasturbine (15) angetriebenen Ladegebläse (20) in Serie vorgeschaltet ist und nach dem stromabwärts letzten Ladegebläse (20) ein Ladeluftdruckmesser (24) zur Beeinflussung der Ladeluftmenge vorgesehen ist, **dadurch gekennzeichnet**, daß als gesonderter Motor (11) für das Vorgebläse (19) und als Hauptmotor (10) je ein Rotationskolben-Dieselmotor mit niedriger Verdichtung bei stark ungleicher Leistungsdimensionierung von Hauptmotor (10) und kleinerem Vorgebläsemotor (11) verwendet ist, das Vorgebläse (19) als volumetrischer Verdichter für den hohen Anlauf-Ladeluftdruck ausgebildet ist und zusätzlich zu seinem Motor (11) einen elektrischen Startermotor (22) aufweist, zwischen dem Luftausgang des Vorgebläses (19) und dem Ladelufteinlaß des Vorgebläsemotors (11) eine Sperrschiebereinrichtung (12 + 13) zur anfänglichen Alleinladung des Vorgebläsemotors (11) vorgesehen ist, am Hauptmotor (10) für dessen jeweils erste Umdrehung ein vom Vorgebläse (19) und dessen Motor (11) in Betriebsbereitschaft gebrachter ladeluftbetätigter Totpunktüberwinder (38) vorhanden ist und der Ladeluftdruckmesser (24) zusammen mit einem nahebei angeordneten Ladelufttemperaturmesser (25) zur Regelung des gegenüber dem hohen Anlauf-Ladeluftdruck temperaturabhängig niedrigeren Betriebs-Ladeluftdrucks des Hauptmotors (10) durch einen Leistungsregler (23) des Vorgebläsemotors (11) eingesetzt ist.

2. Brennkraftmaschine nach Anspruch 1, dadurch gekennzeichnet, daß der Vorgebläsemotor (11) mit der anfänglichen Einschränkung durch die Sperrschiebereinrichtung (12 + 13) an einen mit dem Hauptmotor (10) gemeinsamen Ladeluftsammler (14) angeschlossen ist.

3. Brennkraftmaschine nach Anspruch 1 oder 2, dadurch gekennzeichnet, daß der Hauptmotor (10) und der Vorgebläsemotor (11) mit mehr als einem Rotationskolben ausgestattet sind.

4. Brennkraftmaschine nach einem der Ansprüche 1 bis 3, dadurch gekennzeichnet, daß der Hauptmotor (10) und der Vorgebläsemotor (11) in ihrer geometrischen Verdichtung übereinstimmen.

5. Brennkraftmaschine nach einem der Ansprüche 1 bis 4, dadurch gekennzeichnet, daß der Vorgebläsemotor (11) und der Hauptmotor (10) an einen zu der Abgasturbine (15) führenden gemeinsamen Abgassammler (16) angeschlossen sind.

6. Brennkraftmaschine nach einem der Ansprüche 1 bis 5, dadurch gekennzeichnet, daß von einem Leistungsmelder (17) des Hauptmotors (10) wenigstens ein zweistufiger Abgasturbolader (18) parallel zu der Serienschaltung des Vorgebläses (19) und des von der Abgasturbine (15) angetriebenen Ladegebläses (20) zuschaltbar ist.

7. Brennkraftmaschine nach einem der Ansprüche 1 bis 6, dadurch gekennzeichnet, daß der Hauptmotor (10) ohne Zwischenfügung eines Wechselgetriebes zum Antrieb eines Kraftfahrzeuges eingesetzt ist.

8. Brennkraftmaschine nach einem der Ansprüche 1 bis 7, dadurch gekennzeichnet, daß der Vorgebläsemotor (11) und der Hauptmotor (10) mit je einer in ihrer Gesamtbetriebszeit oder zumindest in ihrer Warmlaufphase aktivierten Dauerglühzündeinrichtung versehen sind.

9. Brennkraftmaschine nach einem der Ansprüche 1 bis 8, dadurch gekennzeichnet, daß der Vorgebläsemotor (11) und der Hauptmotor (10) mit je einer über 360° Drehwinkel der Rotationskolben ununterbrochen arbeitenden Dieselöleinspritzeinrichtung versehen sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 474 591 (MAN) <br> * Seite 1, Zeile 1-19 * <br> * Seite 5, Zeile 1-31 * <br> * Seite 7, Zeile 37 - Seite 8, Zeile 8 * <br> * Seite 11, Zeile 1-11 * <br> * Abbildungen 1-2 * <br> --- | 1 | F02B37/04 <br> F02B37/00 |
| A | PATENT ABSTRACTS OF JAPAN <br> vol. 4, no. 158 (M-39)(640) 5. November 1980 <br> & JP-A-55 109 727 ( KAWASAKI HEAVY IND LTD ) 23. August 1980 <br> * Zusammenfassung * <br> --- | 1 | |
| A | PATENT ABSTRACTS OF JAPAN <br> vol. 4, no. 158 (M-139)(640) 5. November 1980 <br> & JP-A-55 109 728 ( KAWASAKI HEAVY IND LTD ) 23. August 1980 <br> * Zusammenfassung * <br> --- | 1 | |
| A | GB-A-2 090 913 (MTU) <br> --- | | |
| A | FR-A-2 136 611 (AKTIEBOLAGET GOTAVERKEN) <br> --- | | **RECHERCHIERTE SACHGEBIETE (Int. Cl.5)** |
| A | GB-A-2 015 644 ( KUHNLE KOPP & KAUSCH ) <br> --- | | F02B |
| A | US-A-4 669 269 (MTU) <br><br> ----- | | |

Der vorliegende Recherchenbericht wurde für alle Patentansprüche erstellt

| Recherchenort | Abschlußdatum der Recherche | Prüfer |
|---|---|---|
| DEN HAAG | 26 MAERZ 1992 | KLINGER T.G. |